# EUROPEAN PATENT APPLICATION

(11) **EP 1 584 728 A1**
(43) Date of publication of application: **12.10.2005**
(21) Application number: 05000914.1
(22) Date of filing: 18.01.2005
(51) Int. Cl.: D06F 25/00, D06F 39/04, D06F 58/24

(54) **Heating apparatus of washing machine and washing method thereof**

(30) Priority: 09.04.2004 KR 2004024543
(71) Applicant: LG ELECTRONICS INC., Seoul 150-010 (KR)
(72) Inventor: Hong, Sang Wook, Mapo-ku Seoul 121-030 (KR); Lim, Hee Tae, Wonmi-ku Buchun-si Kyungki-do 420-757 (KR)
(74) Representative: TER MEER - STEINMEISTER & PARTNER GbR

(57) **Abstract**

A heating apparatus of a washing machine and a washing method thereof. The heating apparatus includes a circulation channel installed outside a tub for connecting one side of the tub to the other side of the tub, and an orifice, water drop supply device for supplying water, an air blower for circulating the water, and a heater, which are sequentially installed in the circulation channel. The heating apparatus supplies steam or hot wind to the tub in a washing or rinsing operation, thereby improving the washing capacity of the washing machine, minimizing the time taken to perform the washing or rinsing operation and an energy consumption rate, and allows the washing machine to perform a drying operation using hot wind without any additional element, thereby diversifying its functions and minimizing production costs.

## Description

### BACKGROUND OF THE INVENTION

### Field of the Invention

The present invention relates to a washing machine, and more particularly to a heating apparatus of a washing machine, which provides hot wind or steam in a washing or rinsing mode, and is also operated in a drying mode, and a washing method thereof.

### Description of the Related Art

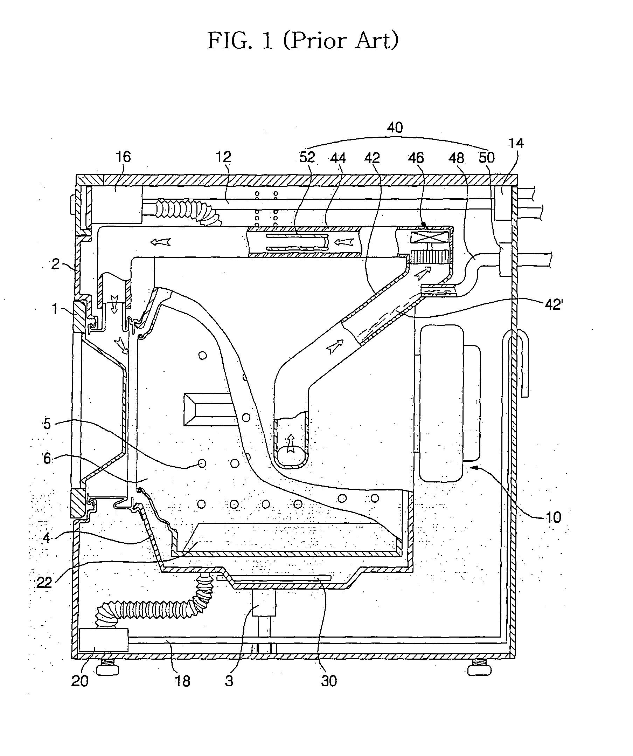

Fig. 1 is a longitudinal-sectional view of a conventional washing machine.

The conventional washing machine comprises a cabinet 2 provided with a door 1 installed on the front door thereof, a tub 4 placed in the cabinet 2 and supported by a damper 3, a drum 6 rotatably installed in the tub 4 and provided with a plurality of water pores 5 formed through the cylindrical surface thereof, and a driving device 10 installed outside the tub 4 and connected to the drum 6 by a rotary shaft for rotating the drum 6.

A water supply pipe 12 provided with a water supply valve 14 for guiding wash water to the tub 4 is connected to the upper part of the tub 4.

The water supply pipe 12 passes through a detergent container 16 containing a detergent. Accordingly, when wash water is supplied to the tub 4 through the water supply pipe 12, the detergent contained in the detergent container 16 is supplied together with the wash water to the tub 4.

A drainage pipe 18 for guiding the wash water of the tub 4 to the outside is connected to the lower part of the tub 4, and the drainage pump 20 is installed on the drainage pipe 18.

Lifters 22, for lifting up laundry placed in the drum 6 and then dropping the laundry by gravity when the drum 6 containing the laundry is rotated, are formed on the inner wall of the drum 6.

Further, a washing heater 30 is installed in the washing machine, thereby heating the wash water supplied to the tub 4 to a temperature suitable to wash the laundry and generating steam for sterilizing the laundry.

Generally, the washing heater 30 is installed on the bottom of the inside of the tub 4.

Further, a drying apparatus 40 for drying the laundry using hot wind for a short period of time, rather than naturally drying the laundry, after the washing of the laundry is completed.

The drying apparatus 40 includes a condensing duct 42 connected to the lower part of the tub 4, a drying duct 44 for connecting the condensing duct 42 and the upper part of the tub 4, an air blower 46 for generating air-blowing force from the condensing duct 42 to the drying duct 44, a cooling water channel 48 for supplying cooling water 42' to the condensing duct 42, a cooling water valve 50 for opening and closing the cooling water channel 48, and a drying heater 52 installed in the drying duct 44.

Generally, in a washing method of the above-described washing machine, a washing mode for removing dirt from the laundry, a rinsing mode for rinsing the laundry with clean wash water, and a dehydrating mode for eliminating moisture from the laundry are sequentially operated. The above modes may be selectively performed according to user' selection.

In case that the washing heater 30 is installed in the washing machine, the washing heater 30 heats the wash water to a temperature suitable to wash the laundry in the washing or rinsing mode, and heats the wash water to a temperature higher than the preceding temperature to perform steam washing.

In case that the drying apparatus 40 is installed in the washing machine, the washing method is operated also in a drying mode for completely drying the laundry using hot wind.

In the drying mode, the air blower 46 of the drying apparatus 40 is operated to circulate air into the tub 4, the condensing duct 42, the drying duct 44, and the tub 4 in order, and the condensing duct 42 condenses the air of high humidity in the tub 4 using cooling water. The condensed air is heated by the drying heater 52 of the drying duct 44, thereby being changed into hot wind. Here, the cooling water supplied to the condensing duct 42 is supplied to the tub 4, and is then discharged to the outside through the drainage pipe 18.

In the conventional washing machine, when the temperature of the wash water increases or a steam-washing operation is performed, the wash water is first supplied to the tub 4 and heated by the washing heater 30, and laundry is heated by the heated wash water. Accordingly, the conventional washing machine is disadvantageous in that the time taken to perform the washing or rinsing operation is elongated and an energy consumption rate is increased.

Further, the washing machine, which is performed in the drying operation, requires the drying apparatus 40, operated in the same manner as the washing heater 30, thereby increasing the production costs and having an increased size.

### SUMMARY OF THE INVENTION

Therefore, the present invention has been made in view of the above problems, and it is an object of the present invention to provide a heating apparatus of a washing machine, which increases the temperature of wash water supplied to a tub in a washing or rinsing operation, so as to be suitable to wash the laundry, or minimizes the time and energy consumption taken to perform the washing or rinsing operation of a steam-washing mode, and a washing method thereof.

It is another object of the present invention to provide a heating apparatus of a washing machine, which has a drying function as well as increases the temperature of wash water or performs a steam-washing mode, and a washing method thereof.

In accordance with one aspect of the present invention, the above and other objects can be accomplished by the provision of a heating apparatus of a washing machine comprising: a circulation channel for connecting one side of a tub to the other side of the tub so that air of the tub is circulated therethrough; an air blower installed in the circulation channel for generating air-blowing force; a heater installed in the circulation channel for heating air of the circulation channel; and water drop scattering device installed in the circulation channel for scattering water drops in air blown by the heater so that steam is supplied to the tub.

The circulation channel may include a condensing duct connected to one side of the tub for condensing the air of the circulation channel; and a drying duct connecting the condensing duct to the other side of the tub and including the heater installed therein.

The water drop scattering device may be installed in the condensing duct.

The water drop scattering device may include water drop supply device including a nozzle for spraying water drops into the circulation channel; and an orifice installed in the circulation channel for scattering the water drops supplied into the circulation channel.

The orifice may be obtained by forming a protrusion along the inner wall of the air blower.

The orifice may have a shape such that the width of the orifice is gradually narrowed and then gradually broadened in the direction of blowing air of the air blower.

The water drop scattering device may be located in front of the air blower in the direction of blowing air of the circulation channel.

In accordance with a further aspect of the present invention, there is provided a heating apparatus of a washing machine comprising: a condensing duct connected to one side of a tub; a drying duct connecting the condensing duct to the other side of the tub, and including a heater installed therein; an air blower for generating air-blowing force in the direction from the condensing duct to the drying duct; a nozzle installed in the condensing duct for spraying water into the condensing duct; and water drop scattering device installed in the condensing duct, and including an orifice for scattering the water sprayed into the condensing duct.

The orifice may have a shape such that the width of the orifice is gradually narrowed and then gradually broadened in the direction of blowing air of the air blower.

In accordance with another aspect of the present invention, there is provided a washing method of a washing machine comprising: circulating air of a tub into a circulation channel in a washing or rinsing operation, and spraying and scattering water in a dropping state into the circulation channel; producing steam by operating a heater installed in the circulation channel; and supplying the steam to the tub.

The washing method may further comprise: supplying a larger quantity of water in a drying operation to the circulation channel than that of the washing or rinsing operation during the circulation of the air of the tub into the circulation channel; condensing the air of the circulation channel, producing hot wind by heating the condensed air using the heater; and supplying the hot wind to the tub.

The velocity of air blown into the circulation channel when the steam is supplied to the tub may be higher than the velocity of air blown into the circulation channel when the hot wind is supplied to the tub.

Wash water may be supplied to the tub through the circulation channel in the washing or rinsing operation.

In accordance with yet another aspect of the present invention, there is provided a washing method of a washing machine comprising: circulating air of a tub into a circulation channel in a washing or rinsing operation; heating the air of the circulation channel to produce hot wind; and supplying the hot wind to the tub.

Wash water may be supplied to the tub through the circulation channel in the washing or rinsing operation.

The washing method may further comprise drying laundry of the tub using the hot wind in a drying operation.

Water drops may be sprayed selectively into the circulation channel and scattered so that steam is supplied to the tub.

The velocity of air blown into the circulation channel when the steam is supplied to the tub may be higher than the velocity of air blown into the circulation channel when the hot wind is supplied to the tub.

A larger quantity of water when the hot wind is supplied to the tub may be supplied to the circulation channel than when the water drops are sprayed into the circulation channel.

The washing method may further comprise drying laundry of the tub using the hot wind in a drying operation.

In the heating apparatus of a washing machine and the washing method thereof in accordance with the present invention, steam or hot wind is supplied to an upper part of a tub in a washing or rinsing operation so as to directly heat wash water and laundry, thereby reducing the time taken to perform the washing or rinsing operation and an energy consumption rate, and improving a washing capacity.

Further, in the heating apparatus of a washing machine and the washing method thereof in accordance with the present invention, hot wind is produced in the same manner as the washing or rinsing operation and is supplied to the tub so as to dry the wet laundry, thereby diversifying the function of the heating apparatus without additional cost and minimizing production costs of the heating apparatus.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a longitudinal-sectional view of a conventional washing machine; and
FIG. 2 is a longitudinal-sectional view of a washing machine in accordance with the present invention.

### DESCRIPTION OF THE PREFERRED EMBODIMENTS

Now, with reference to the annexed drawings, an embodiment of a heating apparatus of a washing machine and a washing method thereof in accordance with the present invention will be described in detail.

Although the present invention may comprises a plurality of embodiments of a heating apparatus of a washing machine and a washing method thereof, the most preferred embodiment will be described hereinafter. The essential structures of the heating apparatus of the washing machine of the present invention and the washing method thereof are the same as those of the conventional heating apparatus of the washing machine and the conventional washing method thereof, and detailed description thereof will thus be omitted.

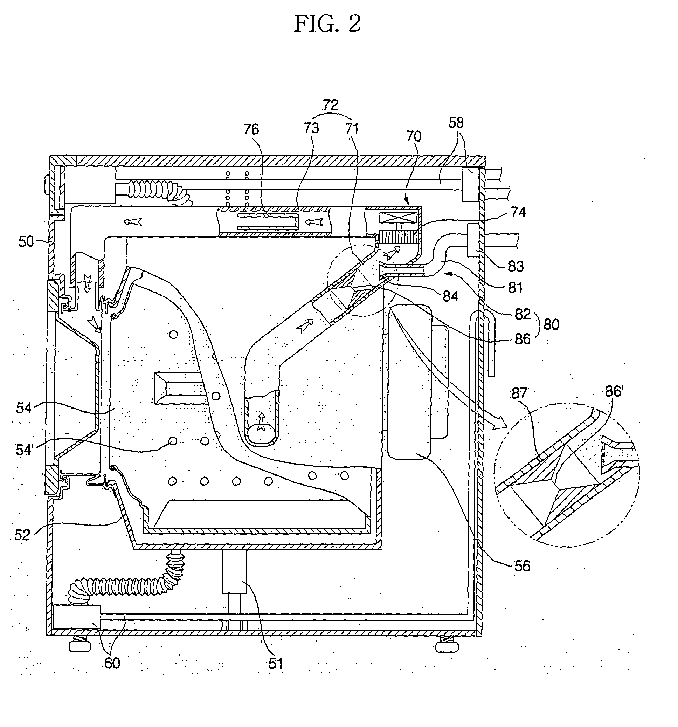

FIG. 2 is a longitudinal-sectional view of a washing machine in accordance with the present invention.

The washing machine as shown in FIG. 2 comprises a tub 52 placed in the cabinet 50 and supported by a damper 51, a drum 54 rotatably installed in the tub 52 and provided with a plurality of water pores 54' formed through the cylindrical surface thereof, a driving device 56 for rotating the drum 54, a water supply device 58 for supplying wash water to the tub 52, a drainage device 60 for discharging the wash water of the tub 52, and a heating apparatus 70 for supplying steam to the tub 52.

The heating apparatus 70 includes a circulation channel 72 installed outside the tub 52 for connecting the upper and lower parts of the tub 52 so that the air of the tub 52 is circulated, an air blower 74 installed in the circulation channel 72 for blowing the air of the circulation channel 72 to the upper part of the tub 52, an electric heater 76 installed in the circulation channel 72 for heating the air of the circulation channel 72, and water drop scattering device 80, connected to the circulation channel 72 so that steam is supplied from the circulation channel 72 to the tub 52, for scattering water drops over the air blown to the heater 76.

The air blower 74 is located on the upper part of the tub 52. The heater 76, as shown by the arrows in FIG. 2, is placed in the rear of the air blower 74 in the direction of blowing the air of the circulation channel 72. The water drop scattering device 80 is placed in front of the air blower 74 in the direction of blowing the air of the circulation channel 72.

The water drop scattering device 80 includes water drop supply device 82 for spraying the water into the circulation channel 72 in a dropping state, and an orifice 86 placed in the circulation channel 72 for scattering the water drops sprayed into the circulation channel 72.

The water drop supply device 82 includes a water channel 81 for connecting the circulation channel 72 to a water storage tank or a water tap, a water channel valve 83 installed on the water channel 81 for opening and closing the water channel 81, and a nozzle 84 connected to the end of the water channel 81 such that the nozzle 84 is placed in the circulation channel 72.

Preferably, the water channel valve 83 controls water passing through the water channel 81 to have a small amount so that the water drop sprayed from the nozzle 84 into the circulation channel 72 is easily scattered.

The nozzle 84 is located in the rear of the orifice 86 in the direction of blowing the air of the circulation channel 72 so that the water drops sprayed from the nozzle 84 into the circulation channel 72 are scattered by the orifice 86.

Preferably, the nozzle 84 is placed close to the air blower 74 so that the water drops sprayed from the nozzle 84 into the circulation channel 72 are easily scattered by the air-blowing force of the air blower 74. More preferably, the air blower 74 is driven at a high speed so that the liquid drops sprayed from the nozzle 84 into the circulation channel 72 are more easily scattered.

The orifice 86 is obtained by forming a protrusion 87 along the inner wall of the circulation channel 72 so as to partially narrow the circulation channel 72. The protrusion 87 may be formed integrally with the circulation channel 72, and may vary the size of the orifice 86.

Preferably, the orifice 86 has a shape such that the width of the orifice 86 is narrowed in the direction of blowing the air of the circulation channel 72 to form a neck portion 86' having the smallest dimensions and is then broadened again.

The heating apparatus 70 of the present invention further comprises air condensing means connected to the circulation channel 72 for condensing air blown to the heater 76, thereby supplying hot wind of humidity lower than that of steam from the circulation channel 72 to the tub 52.

The air condensing means supplies cold water to the circulation channel 72, thereby condensing the air in the circulation channel 72. However, since the water drop supply device 82 also supplies water, the heating apparatus of the present invention condenses the air of the circulation channel 72 using the water drop supply device 82 without the air condensing means.

That is, when hot wind is supplied to the tub 52 compared to when steam is supplied to the tub 52, a larger quantity of water is supplied from the water drop scattering device 82 to the circulation channel 72 and the air blower 74 is more slowly rotated. Then, the water supplied from the water drop supply device 82 to the circulation channel 72 is not scattered and flows along the circulation channel 72 toward the lower part of the tub 52, thereby condensing the air of the circulation channel 72.

The above-described heating apparatus 70 for supplying steam and hot wind to the tub 52 selectively supplies one of steam and hot wind to the tub 52. The circulation channel 72 is divided into a condensing duct 71 including the water drop scattering device 80 or the air condensing means, and a drying duct 73 including the heater 76. Preferably, the water channel valve 83 controls the respective quantity of water when steam is supplied to the tub 52 and when hot wind is supplied to the tub 52.

The above heating apparatus 70 may be used to supply water to the lower part of the tub 52 through the water drop supply device 82 and the circulation channel 72 regardless of the supply of steam or hot wind to the tub 52.

Hereinafter, the function of the above-described heating apparatus 70 will be described in detail.

In order to supply steam to the tub 52, the air blower 74 is operated so that the air of the tub 52 is circulated through the circulation channel 72. Then, the water drop supply device 82 is operated so that water drops are sprayed into the condensing duct 71 of the circulation channel 72.

The water drops sprayed into the condensing duct 71 of the circulation channel 72 are scattered by the difference of speeds of current generated by the orifice 86 formed in the circulation channel 72. Here, in order to facilitate the scattering of the water drops sprayed into the condensing duct 71 of the circulation channel 72, the air blower 74 is operated at a high speed (approximately 3,000rpm) and the water channel 81 is controlled such that a small amount of water flows therethrough.

The air of the tub 52 is circulated into the circulation channel 72, and the water drops are scattered in the condensing duct 71 of the circulation channel 72. Simultaneously, the heater 76 is operated, thereby heating the air in which the water drops are scattered. Thus, steam is generated from the drying duct 73 of the circulation channel 72, and is supplied to the tub 52.

In order to supply hot wind to the tub 52, in the same manner as the supply of steam to the tub 52, the air blower 74 is operated so that the air of the tub 52 is circulated through the circulation channel 72, the water drop supply device 82 is operated so that water drops are sprayed into the condensing duct 71 of the circulation channel 72, and the heater 76 is operated so that the air of the drying duct 73 of the circulation channel 72 is heated.

However, in order to cause the water, sprayed from the water drop supply device 82 to the condensing duct 71 of the circulation channel 72, to flow along the condensing duct 71 of the circulation channel 72 toward the lower part of the tub 52, the operating speed of the air blower 74 is lowered (approximately 2,000rpm) and the water channel 81 is controlled such that a large quantity of amount of water flows therethrough, compared to the supply of steam to the tub 52. Here, it is preferable that cold water be supplied from the water drop supply device 82 to the condensing duct 71 of the circulation channel 72.

In case that the heating apparatus 70 is operated as described above, when the air of the tub 52 is circulated along the circulation channel 72, the air is condensed by the cold water in the condensing duct 71 of the circulation channel 72, and the condensed air is heated by the heater 76 in the drying duct 73 of the circulation channel 72, thereby producing hot wind having a comparatively low humidity. The hot wind produced by the circulation channel 72 is supplied to the tub 52 by the air-blowing force of the air blower 74.

Hereinafter, washing and rinsing operations of a washing machine comprising the above-described heating apparatus will be described in detail.

First, in the washing operation, wash water is supplied to the tub 52 such that laundry in the drum 54 is sufficiently soaked in the wash water, and a detergent is dissolved in the wash water supplied to the tub 52 so that the laundry in the drum 54 is washed clean.

Here, the wash water may be supplied to the tub 52 through the water supply device 58. Further, since the water drop supply device 82 also serves to supply water, the wash water may be supplied to the lower part of the tub 52 through the water drop supply device 82 and the circulation channel 72. Otherwise, the wash water may be supplied to the tub 52 through the water supply device 58, the water drop supply device 82, and the circulation channel 72. In case that the wash water is supplied to the tub 52 through the water drop supply device 82 and the circulation channel 72, preferably, the air blower 74 is stopped so as not to forcibly circulate the air of the tub 52 through the circulation channel 72, and the heater 76 is not operated.

After a sufficient amount of wash water is supplied to the tub 52, the drum 54 is rotated by the driving device 56. Then, the laundry in the drum 54 is washed by the current of the wash water, the friction with the tub 52, and the emulsification of the detergent.

During the washing operation, steam can be supplied to the tub 52 through the heating apparatus 70. The steam supplied to the tub 52 serves to directly heat the wash water supplied to the tub 52 and the laundry placed in the drum 54, thereby easily removing dust from the laundry and sterilizing the laundry similar to the boiling the laundry. Further, since steam permeates the laundry more rapidly than water, the supply of the steam reduces the quantity of the wash water supplied to the tub 52 compared to the non-supply of the steam under the condition that the quantity of water and the washing course are the same.

Alternately, during the washing operation, hot wind may be supplied to the tub 52 through the heating apparatus 70, thereby heating the wash water supplied to the tub 52.

After the washing operation is completed, the wash water supplied to the tub 52 is discharged to the outside through the drainage device 60.

Thereafter, in the rinsing operation, rinse water is supplied to the tub 52, and the drum 54 is rotated by the driving device 56, thereby rinsing the laundry.

In the rinsing operation, in the same manner as the washing operation, when the rinse water is supplied to the tub 52, the rinse water can be supplied through the water supply device 58, or the water drop supply device 82 and the circulation channel 72. Further, in order to easily rinse the laundry in the rinsing operation, steam or hot wind can be supplied to the tub 52 through the heating apparatus 70.

The above rinsing operation may be repeated plural times, and whenever the rinsing operation of each cycle is completed, the rinse water of the tub 52 is discharged to the outside through the drainage device 60.

The washing machine comprising the above heating apparatus 70 can perform a drying operation for drying the wet laundry placed in the drum 54 using hot wind produced by the heating apparatus.

That is, when the wet laundry is placed in the drum 54 and the drying operation is performed, hot wind is produced by the heating apparatus 70, and supplied to the tub 52. Then, moisture of the wet laundry placed in the drum 54 is evaporated by the hot wind supplied to the tub 52, thus drying the laundry of the drum 54. Here, the drainage device 60 is operated so that water is not collected in the bottom of the tub 52.

As apparent from the above description, the present invention provides a heating apparatus of a washing machine, which supplies steam or hot wind to an upper part of a tub in a washing or rinsing operation so as to directly heat wash water and laundry, and a washing method thereof, thereby reducing the time taken to perform the washing or rinsing operation and an energy consumption rate, and improving a washing capacity.

Further, the heating apparatus of the present invention produces hot wind in the same manner as the washing or rinsing operation and supplies the hot wind to the tub so as to dry the wet laundry, thereby diversifying its function without additional cost and minimizing production costs.

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A heating apparatus of a washing machine comprising:
a circulation channel for connecting one side of a tub to the other side of the tub so that air of the tub is circulated therethrough;
an air blower for generating air-blowing force in the circulation channel;
a heater installed in the circulation channel; and
water drop scattering device for scattering water drops in air blown by the heater so that steam is supplied to the tub.

2. The heating apparatus as set forth in claim 1, wherein the circulation channel includes:
a condensing duct including air-condensing means connected to one side of the tub for condensing air; and
a drying duct connecting the condensing duct to the other side of the tub and including the heater installed therein.

3. The heating apparatus as set forth in claim 1, wherein the water drop scattering device includes:
a nozzle for spraying water drops into the circulation channel; and
an orifice installed in the circulation channel for scattering the water drops.

4. The heating apparatus as set forth in claim 3,
wherein the orifice has a shape such that the width of the orifice is gradually narrowed and then gradually broadened in the direction of blowing air of the air blower.

5. A washing method of a washing machine comprising:
circulating air of a tub into a circulation channel in a washing or rinsing operation, and spraying and scattering water in a dropping state into the circulation channel;
producing steam by operating a heater installed in the circulation channel; and
supplying the steam to the tub.

6. The washing method as set forth in claim 5, further comprising:
supplying a larger quantity of water in a drying operation to the circulation channel than that of the washing or rinsing operation during the circulation of the air of the tub into the circulation channel;
condensing the air of the circulation channel, producing hot wind by heating the condensed air using the heater; and
supplying the hot wind to the tub.

7. The washing method as set forth in claim 6,
wherein the velocity of air blown into the circulation channel in the washing or rinsing operation is higher than the velocity of air blown into the circulation channel in the drying operation so that the water drops are scattered.

8. The washing method as set forth in claim 5,
wherein wash water is supplied to the tub through the circulation channel in the washing or rinsing operation.

9. A washing method of a washing machine comprising:
circulating air of a tub into a circulation channel in a washing or rinsing operation;
heating the air of the circulation channel to produce hot wind; and
supplying the hot wind to the tub.

10. The washing method as set forth in claim 9,
wherein water drops are sprayed selectively into the circulation channel and scattered so that steam having a high humidity is supplied to the tub.

11. The washing method as set forth in claim 9, further comprising drying laundry of the tub using the hot wind in a drying operation.
